# DEMANDE DE BREVET EUROPEEN

(11) **EP 2 242 005 A1**
(43) Date de publication de la demande: **20.10.2010**
(21) Numéro de dépôt: 09305326.2
(22) Date de dépôt: 16.04.2009
(51) Int. Cl.: G06K 19/077

(54) **Dispositif de communication comportant deux puces à interface de communication commune**

(71) Demandeur: Gemalto SA, 92190 Meudon (FR)
(72) Inventeur: Buyukkalender, Arek, 13013 Marseille (FR); Lahoui, Nizar, 13400 Aubagne (FR); Seban, Frédérick, 13260 Cassis (FR)

(57) **Abrégé**

La présente invention concerne un dispositif de communication destiné à communiquer avec un terminal, ledit dispositif comportant au moins deux microcircuits (3, 4) branchés en parallèle à au moins une partie d'une interface de communication commune et des moyens de sélection de l'un des microcircuits;

Le dispositif se distingue en ce que lesdits moyens de sélection (6, 6a, 16) sont aptes à être actionnés par une interaction avec l'extérieur du dispositif, ladite interaction étant distincte d'une réception et/ou interruption de signal de communication.

## Description

La présente invention concerne un dispositif de communication comportant deux puces reliées à une interface de communication au moins en partie commune.

Elle concerne en particulier des dispositifs sans contact comportant une ou plusieurs applications logicielles. Ces applications peuvent servir notamment à des accès et/ou des paiements et/ou identifications en relation avec des terminaux radiofréquences.

Le dispositif peut être tout objet portable comportant un transpondeur radiofréquence tel qu'une carte, étiquette électronique, passeport, montre, téléphone etc. Un transpondeur comprend un microcircuit électronique relié à une interface de communication à antenne. De tels transpondeurs fonctionnent notamment selon la norme ISO 14443 mais l'invention n'est pas limitée cette norme ni au protocole de communication qui y est relatif.

La demande de brevet EP-1267303 décrit un dispositif de communication radiofréquence, de type carte à puce, comprenant deux puces branchées en parallèle sur une antenne. Dans ce système, une puce est capable de fonctionner avec un type de lecteur ou terminal selon un protocole tandis que l'autre puce fonctionne avec un autre lecteur d'un autre type en mettant un oeuvre un protocole différent du précédent. Ainsi l'une ou l'autre puce est en fonctionnement selon la nature du terminal en action étant donné que l'autre puce est incapable de fonctionner avec ce terminal.

La demande de brevet FR-2680262 décrit un dispositif de communication radiofréquence à deux puces. Il met en oeuvre un codage de commande du lecteur pour la sélection de la puce concernée dans la carte; Le recours à ce dispositif nécessite l'intégration d'un décodeur dans la carte et un encodeur sur les terminaux.

L'invention a d'abord pour objectif de permettre une migration d'une technologie et/ou protocole utilisée par un couple terminaux /dispositif portables vers une nouvelle technologie de terminaux et/ou cartes associées et/ou nouveau protocole et ce à moindre coût et/ou avec des moyens simples à mettre en oeuvre

L'invention vise à offrir plus de souplesse d'utilisation selon les utilisations et/ou applications au gré de l'utilisateur avec le cas échéant plus de sécurité et de contrôle sur les opérations avec un seul dispositif de préférence sous forme de carte à puce.

L'invention réside dans la fourniture d'un dispositif portable à au moins deux microcircuits aptes à contenir des applications et dans des moyens de sélection de l'un des au moins deux microcircuits qui soient distincts de moyens de décodage ou logiciel; ces moyens de sélection sont au contraire basés sur l'exploitation ou la mise en oeuvre d'une énergie : pression mécanique, force, énergie électrique, photo-électrique... ; Le cas échéant, de préférence, cette énergie ou force intervient sur des moyens disposés à l'extérieur des microcircuits, pour éviter leur modification. L'actionnement de ces moyens doit pouvoir s'effectuer, de préférence, avec le moins possible de modifications du terminal voire aucune.

L'invention a donc pour objet un dispositif portable de communication destiné à communiquer avec un terminal, ledit dispositif comportant au moins deux microcircuits branchés en parallèle sur au moins une partie d'une interface de communication commune, des moyens de sélection de l'un des microcircuits.

Le dispositif se distingue en ce que lesdits moyens de sélection sont aptes à être actionnés par une interaction avec l'extérieur du dispositif, ladite interaction étant distincte d'une réception et/ou interprétation de signal de communication.

Selon d'autres caractéristiques :
- lesdits moyens de sélection sont actionnables manuellement;
- lesdits moyens de sélection sont actionnables par un signal émis par le terminal;
- Selon une caractéristique préférée, l'un des microcircuits est prioritaire dans l'établissement de la communication par rapport à l'autre microcircuit et lesdits moyens de sélection interviennent pour connecter ou déconnecter le microcircuit prioritaire par rapport à l'interface.

Cet aspect prioritaire entre les deux microcircuits est exploité avantageusement dans l'invention pour créer, d'une part un fonctionnement par défaut du dispositif (sans intervention de l'utilisateur ou de l'extérieur), et/ou d'autre part un fonctionnement nécessitant une intervention volontaire ou contrôle de l'utilisateur sur les moyens de sélection. L'intervention précitée pouvant aussi bien connecter que déconnecter le microcircuit prioritaire.
- Dans un cas, simple, les moyens de sélection comprennent un interrupteur de type à actionnement mécanique positionné sur au moins une liaison du microcircuit prioritaire à l'interface.
- Dans un autre cas, dit automatique, lesdits moyens de sélection comprennent un interrupteur à capteur; ce dernier peut être de préférence sensible à un rayonnement.
- De préférence, l'interface de communication est de type radiofréquence mais l'invention s'applique à d'autre type d'interface notamment de type à contacts électriques, capacitif, optique...
- Selon un mode de réalisation relative à une interface à contacts électriques, L'invention prévoit de préférence, d'utiliser une interaction sans-contact telle qu'un rayonnement lumineux, infrarouge, radiofréquence, capacitif ou autre avec le dispositif, ce dernier comportant des moyens de sélection sensibles à cette interaction sans contact.

Grâce à de telles dispositions, l'invention permet d'utiliser des microcircuits existants sans avoir à modifier de leur circuit "hardware", intégré ou non, ou sans avoir à effectuer une programmation supplémentaire et/ou ni à disposer des moyens de codage interne dans le dispositif pour décoder un signal de terminal.

Les moyens de sélection de l'invention interviennent sur les liaisons entre les plots entrée / sortie des microcircuits et l'interface de communication (antenne ou plages de contact électriques). Ces liaisons sont fermées ou ouvertes selon des modes de réalisation ou montages particuliers.

La fabrication du dispositif est simple puisqu'il suffit d'interposer des moyens de sélection entre les microcircuits et leur interface. Dans un mode de réalisation, il suffit d'une simple diode sensible à la lumière, placée sur une liaison d'une puce à l'interface suffit. Une "led" ou émetteur lumineux est aussi installé sur le terminal tout simplement sur un circuit d'alimentation. Le terminal peut mais n'a pas l'obligation de moduler le rayonnement pour le coder et actionner les moyens de sélection.
- Selon un autre mode de réalisation, on évite de modifier le terminal même de manière minime comme ci-dessus. Selon ce mode on utilise l'énergie modulée transmise au dispositif pour actionner les moyens de sélection. L'énergie peut être de type radiofréquence ou autre. Et côté dispositif, les moyens de sélection utilisent cette énergie pour actionner un interrupteur ou contacteur adapté à cet effet, indépendamment du message véhiculé destiné à lancer une application.

L'invention a l'avantage d'offrir également une solution au vol d'information à l'insu du porteur par des moyens radiofréquences tout en maintenant une souplesse d'utilisation pour d'autres applications (notamment lors d'une utilisation sans intervention volontaire de l'utilisateur ou sans actionnement intentionnel des moyens de sélection dans le cadre d'applications fréquentes telles que transport, prépaiement...).
- Dans un mode de réalisation dans lequel le dispositif est une carte sans contact, on dispose un interrupteur à capteur réceptif de type "Led" sensible à un rayonnement sur une liaison d'un plot de puce à un plot de l'autre puce ou sur une liaison directe à l'antenne. La carte est ensuite laminée avec une feuille transparente ou translucide ou une feuille comportant une fenêtre sur l'extérieur.

Un autre avantage de l'invention est de permettre une sélection d'une puce correspondant à l'application souhaitée sur un même support, de manière simple, sans modifier les microcircuits et/ou le codage ou instructions des terminaux.

De cette manière la migration est facilitée pour un utilisateur puisqu'il a toujours un seul et même support. Ce support peut comprendre les deux microcircuits noyés dans un corps tel un corps de carte à puce.

D'autres caractéristiques et avantages de l'invention ressortiront de la description qui suit, faite à titre illustratif et nullement limitatif, en se référant aux dessins ci-annexés sur lesquels
- la figure 1 illustre un premier mode de réalisation du dispositif conforme à l'invention;
- la figure 2 illustre des signaux de communications émis par un terminal à destination du dispositif selon un mode de réalisation;
- la figure 3 illustre un deuxième mode particulier de réalisation du dispositif conforme à l'invention;
- la figure 4 illustre un troisième mode de réalisation du dispositif conforme à l'invention.

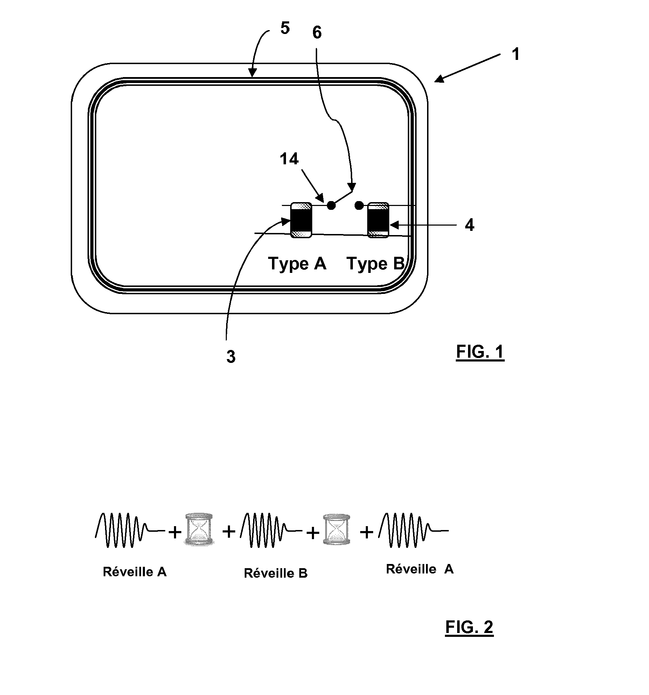

A la figure 1, un dispositif de communication (1) est sous la forme d'une carte à puce sans contact. Toutefois, il pourrait prendre d'autre formes notamment carte à contacts affleurant, clé USB ou autre. Ce dispositif est destiné à communiquer avec un terminal (2) adapté au type de communication supporté par la puce via des signaux de communication (R). Ici dans l'exemple, les signaux sont du type ISO 14443, mais pourraient être autres, notamment ISO 7616 pour une interface à contacts électriques.

Le dispositif comporte au moins deux microcircuits ou composants (3, 4), en l'occurrence deux puces de circuits intégrés. Ces puces sont dans l'exemple montées sur des modules présentant un support isolant et des plages de connexion reliées à au moins une partie d'une interface de communication. Une partie peut comprendre notamment quelques plots d'un bornier de contacts électriques parmi un ensemble de plots.

Les microcircuits ou composants 3, 4 sont branchés en parallèle sur au moins une partie commune d'une interface de communication (5). Il s'agit ici d'une antenne radiofréquence 5 comportant des spires disposées en périphérie du bord de la carte.

Des moyens de sélection (6) de l'un des microcircuits équipent le dispositif. Selon une caractéristique de ce mode de réalisation, ces moyens de sélection sont aptes à être actionnés en réponse à une interaction avec l'extérieur; cette interaction est distincte des signaux de communication utilisés dans la mise en oeuvre des applications chargés dans les microcircuits.

En d'autres termes, dans cet exemple, l'interaction ne s'effectue pas via la même interface que celle utilisée pour la communication entre les microcircuits et le terminal. Ou encore, les messages véhiculés par les signaux de communication modulés ne servent pas à actionner un sélecteur.

L'invention a l'avantage ainsi de s'affranchir de protocole ou lecteur compatible ou moyens de codage et décodage pour actionner un sélecteur de composants dans le dispositif.

Dans ce premier mode de réalisation, les moyens de sélection sont actionnables manuellement par l'utilisateur. Dans le premier mode, est illustré un interrupteur selon un schéma de principe électrique. Tout type d'interrupteur mécanique, électrique, à contact, poussoir, ohmique ou autre peut être utilisé.

L'invention peut comprendre des interrupteurs plus complexes, à multi connexions, des interrupteurs bi stables ou autres notamment ceux comprenant un capteur sensible à un rayonnement externe ou autre activateur.

Le capteur peut être par exemple un capteur infrarouge, un capteur de température du corps humain par application d'un doigt sur une cellule adaptée, un capteur de pression, un capteur sensitif comme ceux des écrans sensitifs, etc.

Selon une caractéristique, l'un des microcircuits est prioritaire dans l'établissement de la communication par rapport à l'autre microcircuit quand ils sont connectés en parallèle et en ce que lesdits moyens de sélection interviennent pour connecter ou déconnecter le microcircuit prioritaire à l'interface.

Dans l'exemple, le microcircuit (3) est de type prioritaire par rapport à l'autre (4) vis à vis de la réception d'une communication provenant d'un terminal. En particulier, il s'agit d'une puce de type "Mifare" de type A des fondeurs tels que les sociétés NXP ou Infineon etc. Cette gestion de priorité peut être faite dans la programmation de la communication dans le Terminal même (dans l'exemple Type A). Cependant cette priorité peut être donc inversée et donc avoir une priorité sur le type B pour les puces des fondeurs tels qu'lnfinéon, ST Microelectronics, Samsung, etc. et dans ce cas une permutation devra être effectuée entre les puces type A et B de la figure 1. La priorité peut aussi provenir du temps de réponse propre aux puces. La puce B peut contenir une application correspondant au standard "Calypso" de "l'association des fondeurs Calypso", définissant les dialogues de sécurité entre les terminaux et les cartes.

Les moyens de sélection comprennent ici un interrupteur positionné sur au moins une liaison du microcircuit prioritaire à l'interface, alors que la puce non prioritaire est toujours connectée à l'interface quel que soit l'état de l'interrupteur.

De manière avantageuse, le montage électrique est réalisé de telle sorte que la puce prioritaire de type A se trouve connectée en second lieu par rapport à la puce 4 non prioritaire de type B, les connexions d'antenne connectant d'abord la puce 4 puis la puce 3 par un pontage de puce à puce.

Un tel montage ci-dessus est avantageux notamment dans le cas d'une migration de technologie ancienne vers une plus récente car en fonctionnement, lorsqu'on ferme le circuit, la puce prioritaire est connectée et se met en fonctionnement au détriment de l'autre. On réalise le circuit ou montage de manière que la puce associée à la nouvelle technologie se mette en fonctionnement sans avoir à terme à actionner l'interrupteur.

Par exemple, si la puce prioritaire 3 de type A représente la nouvelle technologie de migration, il convient préférentiellement de faire un circuit de manière que cette puce soit connectée à l'antenne quand l'interrupteur est au repos. Autrement dit, pour le fonctionnement de la puce non prioritaire 4 de type B, représentant la technologie courante, il faudra actionner l'interrupteur jusqu'à la migration, ce qui en général représente une période plus courte que la période d'usage de la nouvelle technologie de type A.

A la figure 2 est illustré une succession de train d'onde de réveil ou activation de transpondeurs comprenant les éléments (3 ou 4 et 5). Certains des terminaux actuels radiofréquences ou lecteurs émettent par intermittence deux type de signaux destinés à au moins deux types A ou B de puce de manière à les réveiller ("réveille A" puis "réveille B"). Le terminal procède ainsi car il ignore à priori avec quel type de puce A ou B, il aura à dialoguer selon que l'utilisateur détient une carte à simple puce de type A ou B.

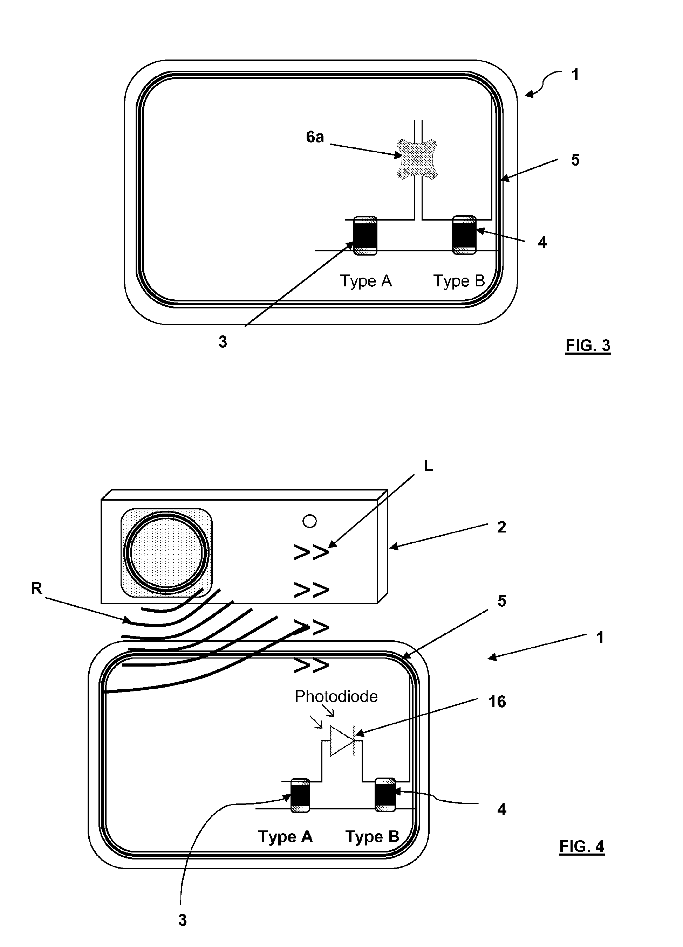

A la figure 3, l'interrupteur de la figure 1 est remplacé par un interrupteur mécanique de type poussoir; il comporte un dôme métallique 6a qui est positionné sur deux liaisons provenant respectivement d'un plot des puces 3 et 4. Le bouton poussoir peut comprendre une rondelle à dôme de type "Belleville" introduite dans une cavité prévue à cet effet.

A la figure 4, selon une caractéristique d'un mode de réalisation du dispositif de communication 1, lesdits moyens de sélection 16 sont actionnables par un signal externe. Celui-ci peut provenir de préférence du terminal. Dans l'exemple, un signal lumineux (L) est émis par le terminal par exemple lorsqu'une personne est détectée par des détecteurs de présence, un faisceau lumineux (L) ou autre rayonne dans cet espace de transaction proche du terminal.

Ce signal lumineux est capté par la carte présentée par un utilisateur. De préférence, le signal est capté par un capteur 16 disposé à l'extérieur des puces 3 et 4. Il s'agit ici d'une photodiode 16 qui est passante quand elle capte de la lumière, fermant ainsi ou en rendant passant le circuit sur lequel elle se trouve. Dans cette figure 4 et les autres, les mêmes références désignent les mêmes éléments.

Cette photodiode est montée comme précédemment sur une liaison de pontage entre les deux puces. La cellule de la photodiode débouche en surface ou est recouverte d'un matériau de la carte transparent ou translucide. Parallèlement ou ensuite, le terminal active la puce 3 ou 4 par des trains d'onde radiofréquences (R) par son interface à antenne propre, notamment à 13,56 MHz et effectue les transactions prévues par le biais de l'antenne 5 de la carte.

Dans un autre mode de réalisation (non représenté) l'interrupteur comprend un élément sensible aux signaux de communication émis par le terminal. L'interrupteur peut être un capteur de type radiofréquence et comprendre par exemple une antenne adaptée.

Le capteur peut être de préférence réglé pour capter très rapidement les signaux radiofréquences avant même ou en même temps que la puce réveillée ne se mette à communiquer et ne réaliser une transaction complète jusqu'au bout (authentification, paiement, accès...).

Ainsi par exemple, ce capteur peut comprendre une antenne plate ou bobine du type de l'antenne 5 et activer un relais ou un coupe circuit sous l'effet d'un train d'onde tel que celui utilisé pour le réveil des puces illustré à la figure 2.

Le maintien de l'interrupteur peut éventuellement s'effectuer par un temporisateur couplé à l'interrupteur et qui va recueillir l'énergie radiofréquence et la stocker par exemple dans une capacité. L'énergie de maintien de l'interrupteur peut s'effectuer notamment par la décharge de la capacité.

On remarque que l'invention n'utilise pas les signaux du lecteur mais uniquement dans ce cas l'énergie des ondes radiofréquences utilisées pour véhiculer les signaux ou messages de communication. Il n'y a donc pas de nécessité non plus dans ce cas de coder ou décoder des signaux provenant du terminal. L'invention fait donc abstraction du protocole utilisé par le lecteur pour sélectionner un microcircuit ou une application

De préférence, l'interrupteur est disposé à l'extérieur des puces, de manière à ne pas avoir à les modifier et pour la simplicité de mise en oeuvre. Toutefois, une disposition interne de l'interrupteur dans l'une et/ou autre puce(s) sous forme intégrée pourrait être également prévue par l'invention. L'avantage ici est de s'affranchir d'un protocole de communication des terminaux ce qui est utile lors d'une migration.

Il n'y a donc pas besoin de coder ou décoder les signaux via une couche logicielle ou hardware dans la puce. L'invention se concentre dans cet exemple sur l'énergie des signaux.

La sélection des puces s'effectue automatiquement en équipant les lecteurs soit d'un émetteur de rayonnement (L) notamment lumineux (ou autre tel que infrarouge...) et en prévoyant l'interrupteur adapté en conséquence dans le dispositif.

Selon un autre mode d'utilisation, avant une migration, le rayonnement actionne une photodiode pour couper le circuit d'une puce prioritaire ou microcircuit de type A appartenant à une technologie révolue à remplacer. Après la migration, le terminal n'émet plus de rayonnement (celui-ci ayant été désactivé) et la puce de type B appartenant à la nouvelle technologie reste activée par défaut de manière automatique.

Inversement, la puce prioritaire 3 de type A est activée par défaut sans rayonnement car son circuit est fermé par défaut au repos sans rayonnement, puis sous l'effet du rayonnement ou autre activation de l'interrupteur ou contacteur, le circuit s'ouvre laissant ainsi la communication à l'autre puce non prioritaire mais représentant la nouvelle technologie de migration.

Ce mode de fonctionnement a l'avantage d'offrir plus de sécurité car il faut être proche du terminal pour fermer le circuit, l'utilisateur n'ayant même pas à actionner lui même l'interrupteur.

On remarque aussi selon un mode de mise en oeuvre que l'invention permet d'utiliser deux ou plusieurs puces de type différents ou identiques destinées à des applications ou usages réservés.

Un utilisateur peut par exemple réserver une puce à des transactions courantes de faible montant et utiliser une autre puce pour des montants plus importants. Les puces peuvent présenter des caractéristiques de sécurité différentes selon l'application.

Une puce peut servir à des accès dans une entreprise, à payer le restaurant d'entreprise, à payer dans des distributeurs de boissons tandis que l'autre puce est utilisée pour se connecter à un ordinateur ou s'authentifier sur un réseau en mettant en oeuvre des mots de passe préenregistrés...

Une autre utilisation est de réserver une puce pour le stockage de données non sensibles tandis que l'autre met en oeuvre des opérations de chiffrements et clés de session spécifiques. La mise en oeuvre est donc différente, notamment au fil du temps.

Un utilisateur peut utiliser une puce contenant des données sensibles pour des transactions de confiances et une autre pour des transactions à risques avec un monde extérieur, l'avantage étant que les puces sont parfaitement cloisonnées et peuvent comprendre de ce fait des secrets d'opérateurs différents.

Dans un autre exemple, la puce prioritaire est consacrée à des transactions importantes et requiert un actionnement volontaire de l'utilisateur comme une pression sur un bouton poussoir pour valider ou permettre une transaction notamment sans contact.

Cette puce 3 est branchée comme sur la figure 3 tandis que la puce 4 de type B non prioritaire est utilisée pour des transactions d'un montant inférieur comme le passage au métro en fonctionnant comme un porte-monnaie électronique pour des transactions financières de faible montant.

On voit bien que le dispositif est utilisé sans même l'actionner ou le sortir d'un sac (pour le métro), tandis que pour des transactions importantes nécessitant un contrôle de l'utilisateur, il faut actionner l'interrupteur fermant le circuit et activant la puce prioritaire.

L'invention offre donc un moyen simple de gagner en souplesse d'utilisation selon les utilisations et/ou applications au gré de l'utilisateur avec le cas échéant plus de sécurité et de contrôle sur les opérations avec une seule carte.

Dans une variante (non représentée), les moyens de sélection des microcircuits 3, 4, peuvent comprendre un clavier à deux ou plusieurs touches pour la saisie d'un code d'accès à l'une ou l'autre microcircuit. L'invention peut comprendre "n" microcircuits et "n" applications, les moyens de sélection permettant de sélectionner chaque microcircuit et/ou application. L'interrupteur peut être aussi un sélecteur incrémentant ou passant d'un microcircuit à l'autre à chaque intervention de l'utilisateur.

## Revendications

1. Dispositif de communication destiné à communiquer avec un terminal, ledit dispositif comportant au moins deux microcircuits (3, 4) branchés en parallèle à au moins une partie d'une interface de communication commune et des moyens de sélection de l'un des microcircuits,
**caractérisé en ce que** lesdits moyens de sélection (6, 6a, 16) sont aptes à être actionnés par une interaction avec l'extérieur du dispositif, ladite interaction étant distincte d'une réception et/ou interruption de signal de communication.

2. Dispositif de communication selon la revendication précédente, **caractérisé en ce que** lesdits moyens de sélection '6, 6a) sont actionnables manuellement.

3. Dispositif de communication selon la revendication 1, **caractérisé en ce que** lesdits moyens de sélection sont actionnables par un signal émis par le terminal.

4. Dispositif de communication selon l'une quelconque des revendications précédentes, **caractérisé en ce que** l'un (3) des microcircuits est prioritaire dans l'établissement de la communication par rapport à l'autre microcircuit (4) et **en ce que** lesdits moyens de sélection interviennent pour connecter ou déconnecter le microcircuit prioritaire à l'interface.

5. Dispositif de communication selon la revendication précédente, **caractérisé en ce que** lesdits moyens de sélection comprennent un interrupteur (6, 6a, 16) positionné sur au moins une liaison (14) du microcircuit prioritaire à l'interface (5).

6. Dispositif de communication selon l'une quelconque des revendications précédentes, **caractérisé en ce que** lesdits moyens de sélection (16) comprennent un interrupteur à capteur sensible à un rayonnement.

7. Dispositif de communication selon l'une quelconque des revendications précédentes, **caractérisé en ce que** l'interface de communication (5) est de type radiofréquence ou à contact électrique.
